# EUROPEAN PATENT SPECIFICATION

(11) **EP 2 061 195 B1**
(45) Date of publication and mention of the grant of the patent: **05.08.2015**
(21) Application number: 06775382.2
(22) Date of filing: 15.08.2006
(51) Int. Cl.: H04L 12/66, H04L 12/28, H04L 29/08

(54) **A HOME GATEWAY NETWORK STORE SYSTEM AND THE NETWORK ACCESSING METHOD THEREOF**
HEIM-GATEWAY-NETZWERKSPEICHERSYSTEM UND NETZWERKZUGANGSVERFAHREN DAFÜR
SYSTÈME DE STOCKAGE EN RÉSEAU PAR PASSERELLE DOMESTIQUE ET PROCÉDÉ D'ACCÈS RÉSEAU CORRESPONDANT

(43) Date of publication of application: 20.05.2009
(73) Proprietor: ZTE Corporation, Shenzhen, Guangdong 518057 (CN)
(72) Inventor: JIANG, Yuejuan, 518057 Shenzhen City Guangdong Province (CN); ZHANG, Lei, 518057 Shenzhen City Guangdong Province (CN); WANG, Yi, 518057 Shenzhen City Guangdong Province (CN)
(74) Representative: Pistolesi, Roberto
(86) International application number: PCT/CN2006/002064
(87) International publication number: WO 2008/031251

(56) References cited:
- WO-A1-2005/045682
- KR-A- 20020 051 555
- US-A1- 2001 034 758
- US-A1- 2004 068 756
- US-A1- 2006 020 960
- US-A1- 2006 168 178
- ALLNET Networks: "ALLNET ALL6500NAS DiskServerUser's Manual", , 1 September 2005 (2005-09-01), XP002715409, Retrieved from the Internet: URL:ftp://212.18.29.48/ftp/pub/allnet/nas/ all6500/ALL6500_Manual_englisch.pdf [retrieved on 2013-10-18]

## Description

### Technical Field of the Invention

The present invention relates to a network storage system and the network accessing method thereof, and especially, to a home gateway network store system and the network accessing method thereof. Related technologies are known from US2006/020960A1, WO2005/045682A1 and ALLNET Network: "ALLNET ALL6500NAS DiskServer User's Manual".

### Background

With the development of network technology, network has totally penetrated into people's daily life and makes people's life and work more convenient.

In the current network storage technology, such as network disk technology, users have to upload files through network from the local to the remote storage space offered by remote storage service providers so as to access or share their files through network. At present, there are mainly two modes to access network storage space, one is based on World Wide Web (Web) and the other is special client. These two remote access technologies are relatively mature. The Web-based network storage is generally bound with electronic mailbox and has the using experience similar to that of the electronic mailbox; The special client mode uses the network storage service based on the special client software and is usually bound with Windows explorer, thus it is easy to be operated and accepted by the users.

However, the aforementioned technologies of network storage space access has the following disadvantages: the users do not own the remote storage device offered by the remote storage service provider, thus they can not upgrade and manage the performance and capacity of the storage device. If the users need large network disk storage space, they have to pay the remote storage service providers extra service fees. The Web-based network storage has bad experience in basic operations on files, and it has complicated steps, thus its function and network speed is limited to a certain extent; while the special client mode can only be used with the downloaded special client. In addition, the users can only use and share their files on the network by uploading the files from the local to the storage device through the network, such uploading process will consume a lot of users' time and network bandwidth when uploading big files such as video files, audio files and so on. Meanwhile, the efficiency of remotely accessing the files is limited by the network bandwidth provided by the remote storage service provider and the processing capability of the server, and the high efficiency of remote access to files by the users can not be guaranteed during the peak period of network access.

At present, the users having home gateway storage device can operate the files therein, but the home gateway storage device can not offer the function of network access.

### Summary of the Invention

In order to overcome the above disadvantages of the existing network storage access technology, the present document offers a home gateway network store system having remote access function and the network accessing method thereof.

The features of the method according to the present invention are defined in the independent claims. Further improvements and embodiments are provided in the dependent claims.

Also provided is a home gateway network store system, wherein the system includes a network-connected gateway storage device and a gateway remote access client,

Wherein, the gateway storage device comprises the following modules:
a front-end resident program module, for completing packet distribution and management and maintenance of network access task;
a file server module, which may be a server module with one or more protocols, for interacting with remote file client and file system module and providing file uploading and downloading functions;
an authority management module, for performing user authentication and authority control for remote user access;
a file system module, for managing the storage in the gateway storage device and accessing the files in the storage;
a storage, for offering file storage space;

The gateway remote access client comprises a remote access client program module, for offering an interface for the user to remotely access the home gateway storage device;

Wherein, the front-end resident program module forwards the packets to the server module or authority management module with the corresponding protocol according to the type of the packets sent by the remote access client program module; the file system module deals with the requests of accessing the files in the storage sent by each file application program module.

Furthermore, in a preferred embodiment, one storage module of the gateway storage device stores remote access client installation program; the gateway remote access client also includes a WEB browser used to send logon information to HTTP server module through the front-end resident program module; the file server module includes a HTTP server module used for submitting the received logon information to the authority management module for authentication, and if authentication pass information is returned and it detects that the remote access client has not installed the remote access client program of the home gateway, the program will be encapsulated and then transferred to said remote access client; after the remote access client installation program is downloaded, it will be automatically installed to generate the remote access client program module.

Furthermore, in a preferred embodiment, the gateway storage device also includes a file client module which may be a client module with one or more protocols, used for connecting with the remote server and downloading the files according to the remote file server file download address information in the download request forwarded by the front-end resident program module, and the downloaded files are saved in storage media of the gateway storage device through the file system module; the remote access client program module is also used for specifying the remote file server file download address information and sending the information to the front-end resident program module; the front-end resident program module forwards the information to a client module with corresponding protocol in the file client module according to the type of the protocol of the packets.

Also provided is a network accessing method for the home gateway network store system, which comprises a network-connected gateway storage device and a gateway remote access client, the method includes the following steps:
Step A: The remote users log on the gateway storage device through the remote access client program module of the gateway remote access client and input authentication information, and the front-end resident program module sends the collected authentication information to the authority management module to authenticate the users' authority;
Step B: The remote users access the gateway storage device through network by using the remote access client program module of the gateway remote access client, and the command is transferred to the front-end resident program module of the gateway storage device;
Step C: After the front-end resident program module has received the file operation command from the remote access client program module, it forwards the command to the corresponding file server module of the gateway storage device for processing, such as the operations of download, upload or browse for the files in the gateway storage device, according to the type of the command; and the file server module reads out the files from the storage and sends them to the gateway remote access client for being saved or displayed, or the file server module receives the files from the gateway remote access client and saves the files in the storage of the gateway storage device.

Furthermore, in a preferred embodiment, the network accessing method also includes a process of downloading remote access client program, which includes the following steps:
(a) The remote users log on the home gateway storage device and input the authentication information through WEB browser of the gateway remote access client, and transfer the authentication information to the HTTP server module of the gateway storage device;
(b) After the HTTP server module analyzes the HTTP packet and identifies that it is user authentication packet, it sends the packet to the authority management module for the authentication of the user's authority, if the authentication can not pass, the access is failed, ending;
(c) After the users' authentication has passed, the HTTP server module checks if the gateway remote access client has installed the remote access client program of the home gateway or not, if yes, the remote users can access the gateway storage device to operate the files in the gateway storage device, ending; otherwise step (d) is performed;
(d) The HTTP server module encapsulates the remote access client installation program of the gateway storage device into a HTTP protocol packet to send to the gateway remote access client, and after the program has been downloaded, it is installed automatically to generate a graphic interface program.

Furthermore, in a preferred embodiment, in said step C, if the type of the command is remote file server file download, the front-end resident program module will send the command to the client module with the corresponding protocol in the file client module, the client module connects with the remote server and downloads the files according to the remote file server file download address information in the command, and the downloaded files are saved in the storage of the gateway storage device through the file system module.

The present invention utilizes the technique characteristics of the home gateway to offer online storage service, by which, users can save, read, share, upload, and download the files in the home gateway storage device as long as they have internet access. In addition, the present document further introduces a firewall module, a remote access client program module and a file client module. On one hand, the present document offers the users the function of accessing the home gateway storage device through network on the home gateway remote access client program, which is more simple and convenient to be operated and is more accordant to the usage habits of users; one the other hand, the present document offers a remote download mechanism for the users, by which, the file download process can be implemented without the participation of the users.

### Brief Description of Drawings

FIG. 1 is a schematic view of a home gateway network store system module in accordance with the present invention;
FIG. 2 is a schematic view of download process of the remote access client program of the home gateway in accordance with the present invention;
FIG. 3 is a schematic view of the network access process of the home gateway network store device in accordance with the present invention.

### Detailed Description of the Invention

The present invention incorporates a function of network access on the home gateway storage device to provide remote online storage service, by which, users can save, read, share, upload, and download the files in the home gateway storage device as long as they can access internet, and thereby the users can "share" online their files with their relatives and friends who have internet access.

In the following, the home gateway network store system and the network accessing method thereof will be described in further detail with combination of the accompanying drawings.

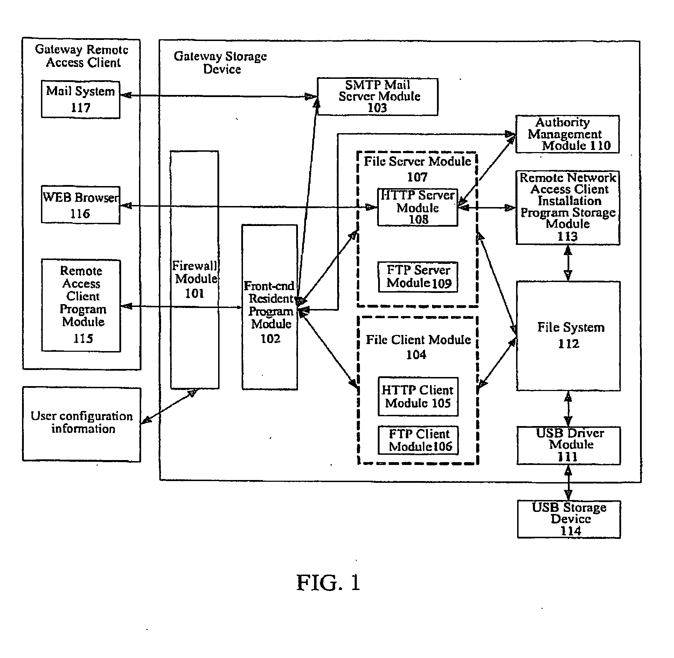

FIG. 1 illustrates the structure of the home gateway network store system in accordance with the present invention. As shown in FIG. 1, the system includes a network-connected gateway storage device and a gateway remote access client, wherein, the gateway storage device includes a firewall module 101, a front-end resident program module 102, a SMTP mail server module 103, a file client module 104, a file server module 107, an authority management module 110, a storage module 113 which saves the remote access client installation program, a file system 112 and USB driver module 111; the gateway remote access client includes a remote access client program module 115, a WEB browser 116, a mail system 117 and user configuration information.

The firewall module 101 includes a serial of configurable safety regulations for implementing certain safety strategy between the home gateway and the internet. All packets from the internet, such as FTP (File Transfer Protocol) or HTTP (Hypertext Transfer Protocol) packets, should be examined by the firewall, and only the packets meeting the safety regulations are accepted by the home gateway, otherwise, the packets will be discarded. The safety regulations of the firewall can be configured through WEB page, network management system, file or other user interfaces.

The authority management module 110 is used for maintaining the account information of the users who access the home gateway storage device and controlling and managing the user's access authority. When the remote users access the home gateway storage device through the WEB browser 116, the HTTP server module 108 will submit the collected user name and password inputted by the remote users to the authority management module 110 for the authentication of the users' authority. In addition, when the remote users log on through the remote access client program module 115, the front-end resident program module 102 will forward the collected user information to the authority management module 110 for user authentication.

The file server module 107 includes a HTTP server module 108 and a FTP server module 109 to provide functions of file upload and download, wherein, the HTTP server module 108 checks if the gateway remote access client has installed the remote access client program or not after the authentication has passed, if not, the remote access client installation program resided in the memory will be downloaded to the gateway remote access client and automatically installed to generate remote access client program module 115 on the gateway remote access client.

The file client module 104 includes a HTTP client module 105 and a FTP client module 106 to download the files in the remote file server to the home gateway storage device.

The remote access client program module 115 is used for providing an interface for the users to remotely access the home gateway storage device. The program has a graphic application program interface and mouse right-clicked menu item "gateway download", wherein, the graphic interface of the application program offers file download HTTP client and FTP client function. Moreover, the remote users can also download files from the remote server to the home gateway storage device through the "gateway download" function without the participation of the gateway remote access client in the download process. In addition, the remote access client program module 115 may also enable the remote users to select the file upload/download result notification mode from the graphic application program interface; the users send the selected file upload/download result notification mode through the remote access client program module 115 to the front-end resident program module 102 for being saved.

The file system 112 is used for managing all of the storages and accessing the files in the storages is response to the requests from the file server module 107 and the file client module 104.

The home gateway can have several external or built-in storage devices, such as hard disks, FLASH (flash memories), CD-RW and USB (Universal Serial Bus) storage device, etc.. As shown in FIG. 1, the file system 112 in the present embodiment reads and writes the files in the USB storage device 114 through the USB driver module 111.

The front-end resident program module 102 is used for distributing the packets according to the type of the packets' protocols received: if the type of the protocol is FTP, then the packet will be forwarded to the FTP server module 109 or the FTP client module 106; if the type of the protocol is HTTP, the packet will be forwarded to the HTTP server module 108 or the HTTP client module 105, and the above file application program modules will interact with the file system 112; If it is user logon information sent by the remote access client program module 115, the information such as the user name and password will be forwarded to the authority management module 110 for user authentication.

The SMTP mail server 103 is used for sending mails to the mail system 117 of the gateway remote access client.

When the remote upload/download of the files have been completed, the file client module 104 or the file server module 107 will notify the file upload/download result to the front-end resident program module 102, which will perform the following operations according to the saved notification mode information: if it is mail notification mode, the front-end resident program module 102 will send a message to SMTP (Simple Mail Transfer Protocol) mail server 103 which will send a notification mail to the mail address set by the remote user; if it is message notification mode, the front-end resident program module 102 will send a message to the remote access client program module 115, and the file upload/download result will be directly shown on the graphic interface. The remote users can receive the notification mail through the mail system 117, or know whether the file is uploaded/downloaded successfully or not according to the information shown on the graphic interface of the remote access client program module 115.

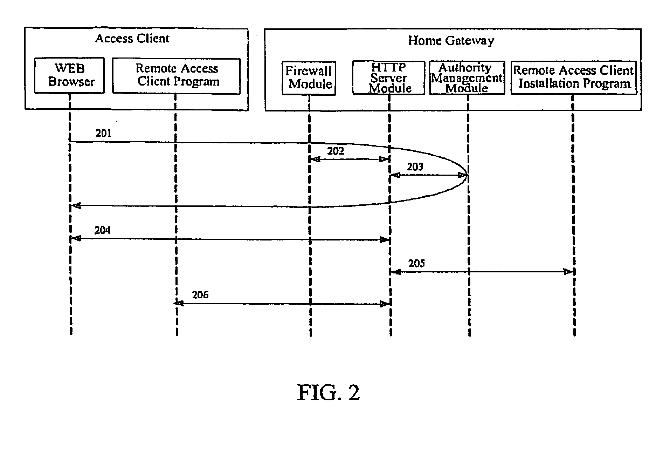

FIG. 2 illustrates the download flowchart of the remote access client program of the home gateway according to the present invention, and the specific steps are:
Step 201: the remote users log on the home gateway storage device through terminal WEB browser;
Step 202: the firewall module checks according to the configured safety regulations whether the HTTP packet is allowed to pass or not, if not, the access is failed, ending; otherwise, the packet is sent to HTTP server module for processing;
Step 203: the HTTP server module analyzes the HTTP packet and identifies that the packet is the user authentication packet, then it submits the packet to the authority management module for user authentication; if the authentication does not pass, the access is failed, ending;
Step 204: After the user authentication has passed, the HTTP server module checks whether the gateway remote access client has installed the remote access client program of the home gateway or not, if yes, then the remote users can remotely access the files saved in the home gateway storage device through the generated remote access client program module; otherwise Step 205 is performed.
Step 205: The HTTP server module encapsulates the remote access client installation program of the home gateway as a HTTP packet and send it to the gateway remote access client. After the remote access client installation program has been downloaded, it is automatically installed to generate a graphic interface program and mouse right-clicked menu item "gateway download".

Where, HTTPS (Hypertext Transfer Protocol Secure) can be used in sending the remote access client installation program of the home gateway in order to improve the safety.

It should be noted that, although the remote access client program in the embodiment is automatically downloaded, the present invention is not limited to this mode, rather, the program can also be directly installed on the client or selectively installed on the internet.

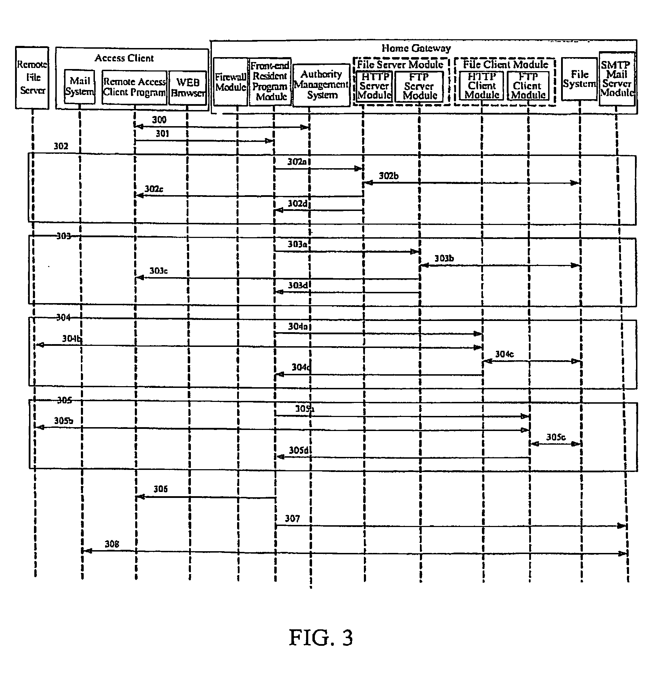

FIG. 3 illustrates a flowchart of the home gateway storage device network access in accordance with the present invention, and the specific steps are:
Step 300: when the remote users log on the home gateway through the remote access client program module, they are firstly required to input their user information such as user name and password. The user information is encapsulated as a private protocol packet which passes the home gateway firewall module to arrive at the front-end resident program module. The front-end resident program module analyzes the type of the packet, if it is an authentication packet, the packet will be forwarded to the authority management module for user authentication;
Step 301: If the user authentication has passed, the user can select the operation type and file upload/download result notification mode from the client program. The command of performing operations of writing/reading by the users on the files in the home gateway storage device is encapsulated in a HTTP packet or a FTP packet, which passes through the home gateway firewall module to arrive at the front-end resident program module. The front-end resident program module distributes the packet to the FTP server module, the FTP client module, the HTTP server module and the HTTP client module according to the type of the packet. In addition, the remote users can select the file download result notification mode on the client interface; the upload/download result notification modes include message notification mode and mail notification mode, etc.;
Step 302: If the users select the way of HTTP to download, upload and browse files, the process will be described below by taking file downloading for example:
Step 302a: the front-end resident program module analyzes the packet sent by the remote access client program module, and if the packet is HTTP file operation command, the front-end resident program module will forward the packet to the HTTP server module;
Step 302b: the HTTP server module interacts with the file system and operates the file through the file system module;
Step 302c: the HTTP server module sends the content of the file to the gateway remote access client;
Step 302d: the HTTP server module sends the result of whether the file being downloaded successfully or not in the form of message to the front-end resident program module.

If it is file uploading, Step 302b is changed to: the gateway remote access client interacts with the HTTP server module to send the content of the file to the HTTP server module; and Step 302c is changed to: the HTTP server module interacts with the file system to save the content of the file in the storage device. The other steps are the same.
Step 303: If the users select the way of FTP to download, upload and browse files, the process will be described below by taking file downloading for example:
Step 303a: the front-end resident program module analyzes the packet sent by the remote access client program module, and if the packet is the FTP file operation command, the front-end resident program module will forward the packet to the FTP server module;
Step 303b: the FTP server module interacts with the file system and operates the file through the file system module;
Step 303c: the FTP server module sends the content of the file to the gateway remote access client;
Step 303d: the FTP server module sends the result of whether the file being downloaded successfully or not in the form of message to the front-end resident program module.
Step 304: if the users select the way of HTTP to download the files from the remote file server to the home gateway file system, then:
Step 304a: the front-end resident program module analyzes the packet sent by the remote access client program module, and if the packet is the HTTP client operation command, the front-end resident program module will forward the packet to the HTTP client module;
Step 304b: the HTTP client obtains the address of the remote server and the address of file download from the received packet, and connects with the remote server to download the file;
Step 304c: the HTTP client saves the received file in the storage media of the gateway storage device through the file system module;
Step 304d: the HTTP client module sends the result of whether the file being downloaded successfully or not in the form of message to the front-end resident program module.
Step 305: if the users select the way of FTP to download the files from the remote file server to the home gateway file system, then:
Step 305a: the front-end resident program module analyzes the packet sent by the remote access client program module, and if the packet is the FTP client operation command, the front-end resident program module will forward the packet to the FTP client module;
Step 305b: the FTP client obtains the address of the remote server and the address of file download from the received packet, and connects with the remote server to download the file;
Step 305c: the FTP client saves the received file in the storage media of the gateway storage device through the file system module;
Step 305d: the FTP client module sends the result of whether the file being downloaded successfully or not in the form of message to the front-end resident program module.
Step 306: if the file upload/download result notification mode saved in the front-end resident program module is message notification, the front-end resident program module will send the file upload/download result to the remote access client program module in the form of message.
Step 307: if the file download result notification mode saved in the front-end resident program module is mail notification, the front-end resident program module will send the file download result and the saved user mail address to the SMTP mail server module, which will then send an email to the user mail address.

It should be noted that, although in the examples in the embodiment, the above four types of operations are described in a certain order, that is, the users download/upload/browse the files in the way of HTTP; the users download/upload/browse the files in the way of FTP; the users download the files from the remote file server to the home gateway file system in the way of HTTP; or the users download the files from the remote file server to the home gateway file system in the way of FTP, these operations have no fixed order, and the users can perform any one of the operations randomly.

### Industrial Applicability

The present invention incorporates the remote access function for the home gateway storage device and provides remote on-line storage service; the present invention also offers a remote download mechanism for the users, by which, the file download process can be implemented without the participation of the user.

## Claims

1. A home gateway network store system, comprising a gateway storage device and a gateway remote access client connected through network,
the gateway storage device comprising:
a front-end resident program module (102) for distributing packets and managing and maintaining network access tasks;
a file server module (107), including server modules with one or more protocols, for interacting with a remote file client and a file system module and providing functions of file upload and download;
an authority management module (110) for performing user authentication and authority control for remote user access;
the file system module for managing a storage in the gateway storage device and performing operations of reading and writing files in the storage;
a storage for offering file storage space;
the gateway remote access client comprises a remote access client program module (115) for offering an interface for the users to remotely access a home gateway storage device;
wherein the front-end resident program module (102) forwards packets sent by the remote access client program module (115) to a server module with corresponding protocol or the authority management module (110) according to the type of the packets, and the file system module deals with requests sent by each file application program module for reading and writing files in the storage,
**characterized in that** the gateway storage device further comprises a file client module (104) including client modules with one or more protocols, used for connecting with a remote server and downloading files according to remote file server file download address information in the download request forwarded by the front-end resident program module (102), and the downloaded files are saved in storage media of the gateway storage device through the file system module; the remote access client program module (115) is also used for specifying the remote file server file download address information and sending the information to the front-end resident program module (102); the front-end resident program module (102) forwards the information to a client module with corresponding protocol in the file client module (104) according to the type of protocol of packets.

2. The home gateway network store system of claim 1, wherein the file server module (107) comprises a FTP server module (109) and/or a HTTP server module (108).

3. The home gateway network store system of claim 1, wherein the file client module (104) comprises a FTP client module (106) and/or a HTTP client module (105).

4. The home gateway network store system of claim 1, wherein a storage module of the gateway storage device stores a remote access client installation program; the gateway remote access client also comprises a WEB browser (116) for sending logon information to a HTTP server module (108) through the front-end resident program module (102); the file server module (107) comprises a HTTP server module (108) for submitting the received logon information to the authority management module (110) for authentication, and if authentication pass information is returned and that a remote access client has not installed a remote access client program of home gateway is detected, the program will be encapsulated and transferred to said remote access client; after being downloaded, the remote access client installation program is automatically installed to generate the remote access client program module (115).

5. The home gateway network store system of claim 1, wherein said gateway storage device further comprises a mail sending module for sending operation result information of each file application program module in the form of mail to the gateway remote access client; said gateway remote access client also comprises a mail receiving module for receiving mails sent by the mail sending module to the gateway remote access client.

6. The home gateway network store system of claim 1, wherein the gateway storage device further comprises a firewall module (101) for performing a certain safety strategy between home gateway and internet and examining all packets from the Internet, and only if the packets meet safety regulations, the packets are accepted by the home gateway, otherwise the packets will be discarded.

7. A network accessing method for home gateway network store system, comprising a gateway storage device and a gateway remote access client connected through network, the method comprising the following steps of:
Step A: logging on the gateway storage device by a remote user through a remote access client program module (115) of the gateway remote access client, inputting authentication information by the remote user, and sending collected authentication information by a front-end resident program module (102) to an authority management module (110) for user authority authentication;
Step B: accessing the gateway storage device through network by the remote user by using the remote access client program module (115) of the gateway remote access client, and transferring a command to the front-end resident program module of the gateway storage device;
Step C: receiving a file operation command from the remote access client program module (115) by the front-end resident program module, forwarding the command according to the type of command to a corresponding file server module (107) of the gateway storage device for processing, if downloading, uploading or browsing files in the gateway storage device, reading out the files from a storage by the file server module (107) and sending the files to the gateway remote access client for being saved or displayed, or receiving files from the gateway remote access client and saving the files in the storage of the gateway storage device,
**characterized in that** in said step C, if the type of the command is remote file server file download, the front-end resident program module (102) will send the command to a client module with corresponding protocol in a file client module (104), the client module connects with a remote server and downloads files according to remote file server file download address information in the command, and the downloaded files are saved in the storage of the gateway storage device through a file system module.

8. The network accessing method of claim 7, wherein the network accessing method further comprises a process of downloading remote access client program, comprising the following steps of:
(a) logging on a home gateway storage device and inputting authentication information by a remote user through a WEB browser of the gateway remote access client, and transferring the information to a HTTP server module (108) of the gateway storage device;
(b) analyzing HTTP packet by the HTTP server module (108) and identifying that the packet is a user authentication packet, sending the packet to the authority management module (110) for user authority authentication, if the authentication can not be passed, the access being failed, ending (203);
(c) checking whether the gateway remote access client has installed the remote access client program of home gateway or not by the HTTP server module (108) after the user authentication is passed, if yes, the remote user being able to access the gateway storage device to operate files therein, ending; otherwise, proceeding to step (d) (204);
(d) encapsulating remote access client installation program of the gateway storage device into a HTTP protocol packet to be sent to the gateway remote access client by the HTTP server module (108), and automatically installing the program after the program has been downloaded, and generating a graphic interface program (205).

9. The network accessing method of claim 7, wherein in said step C, a user can select an operation result notification mode which at least includes a mail notification mode and a message notification mode before performing operations on files, and after the operations on files have been completed, the file server module (107) or the file client module (104) sends an operation result to the front-end resident program module (102); the front-end resident program module judges the operation result notification mode selected by the user:
if the operation result notification mode is the mail notification mode, a message will be sent to SMTP mail server, and the SMTP mail server will send a notification mail to a mail address set by a remote user;
if the operation result notification mode is the message notification mode, a message will be sent to the remote access client program module (115), and a file operation result will be directly displayed on a graphic interface.

10. The network accessing method of claim 7 or 8, wherein a firewall module (101) of the gateway storage device examines all packets from internet, and only if the packets meet safety regulations, the packets will be accepted by the home gateway, otherwise, the packets will be discarded.

## Patentansprüche

1. Heim-Gateway-Netzwerkspeichersystem, umfassend eine Gateway-Speichervorrichtung und einen Gateway-Fernzugriffsclient, die über ein Netzwerk verbunden sind,
wobei die Gateway-Speichervorrichtung umfasst:
ein in einem Frontend untergebrachtes Programmmodul (102) zum Verteilen von Paketen und zum Verwalten und Aufrechterhalten von Netzwerkzugriffsaufgaben;
ein Datei-Servermodul (107), das mehrere Servermodule mit einem oder mehreren Protokollen einschließt, um mit einem entfernten Dateiclient und einem Dateisystemmodul zu interagieren, und Funktionen des Hochladens und Herunterladens von Dateien bereitstellt;
ein Berechtigungs-Verwaltungsmodul (110) zum Ausführen von Benutzer-Authentisierung und zur Berechtigungssteuerung für Benutzer-Fernzugriff,
wobei das Dateisystemmodul zum Verwalten eines Speichers in der Gateway-Speichervorrichtung und zum Ausführen von Datei-Lese- und -Schreib-Vorgängen in dem Speicher vorgesehen ist;
einen Speicher zum Anbieten von Dateispeicherplatz;
wobei der Gateway-Fernzugriffsclient ein Fernzugriffs-Clientprogrammmodul (115) umfasst, um Benutzern eine Schnittstelle für einen Fernzugriff auf eine Heim-Gateway-Speichervorrichtung anzubieten;
wobei das in dem Frontend untergebrachte Programmmodul (102) Pakete, die von dem Fernzugriffs-Clientprogrammmodul (115) gesendet wurden, an ein Servermodul mit einem entsprechenden Protokoll oder an das Berechtigungs-Verwaltungsmodul (110), gemäß der Art der Pakete, weiterleitet, und wobei das Dateisystemmodul Anforderungen behandelt, die durch jedes Datei-Anwendungsprogrammmodul gesendet wurden, um Dateien in dem Speicher zu lesen und zu schreiben,
**dadurch gekennzeichnet, dass** die Gateway-Speichervorrichtung weiter ein Datei-Clientmodul (104) umfasst, das Clientmodule mit einem oder mehreren Protokollen umfasst, verwendet um sich mit einem entfernten Server zu verbinden und Dateien gemäß Datei-Herunterladeadresseninformationen eines entfernten Dateiservers in der Herunterladeanforderung, die durch das in dem Frontend untergebrachte Programmmodul (102) weitergeleitet wurde, herunterzuladen, und wobei die heruntergeladenen Dateien durch das Dateisystemmodul in Speichermedien der Gateway-Speichervorrichtung gesichert werden; wobei das Fernzugriffs-Clientprogrammmodul (115) ebenfalls dazu verwendet wird, um die Datei-Herunterladeadresseninformationen des entfernten Dateiservers zu spezifizieren und die Informationen an das in dem Frontend untergebrachte Programmmodul (102) zu senden; wobei das in dem Frontend untergebrachte Programmmodul (102) die Informationen an ein Clientmodul mit entsprechendem Protokoll in dem Dateiclientmodul (104) gemäß der Art des Protokolls von Paketen weiterleitet.

2. Heim-Gateway-Netzwerkspeichersystem nach Anspruch 1, wobei das Dateiservermodul (107) ein FTP-Servermodul (109) und/oder ein HTTP-Servermodul (108) umfasst.

3. Heim-Gateway-Netzwerkspeichersystem nach Anspruch 1, wobei das Datei-Clientmodul (104) ein FTP-Clientmodul (106) und/oder ein HTTP-Clientmodul (105) umfasst.

4. Heim-Gateway-Netzwerkspeichersystem nach Anspruch 1, wobei ein Speichermodul der Gateway-Speichervorrichtung ein Fernzugriffsclient-Installationsprogramm speichert;
wobei der Gateway-Fernzugriffsclient ebenfalls einen WEB-Browser (116) zum Senden von Einlogg-Informationen an ein HTTP-Servermodul (108) durch das in dem Frontend untergebrachte Programmmodul (102) sendet;
wobei das Dateiservermodul (107) ein HTTP-Servermodul (108) umfasst, um die empfangene Einlogg-Informationen dem Berechtigungs-Verwaltungsmodul (110) zur Authentisierung vorzulegen, und falls Authentisierung-durchgeführt-Informationen zurückgesendet werden und erkannt wird, dass ein Fernzugriffsclient kein Fernzugriffsclientprogramm des Heim-Gateways installiert hat, das Programm verkapselt und an den Fernzugriffclient übertragen wird;
nachdem es heruntergeladen ist, das Fernzugriffsclient-Installationsprogramm automatisch installiert wird, um das Fernzugriffsclientprogrammmodul (115) zu erzeugen.

5. Heim-Gateway-Netzwerkspeichersystem nach Anspruch 1, wobei die Gateway-Speichervorrichtung weiter ein Mail-Sendemodul umfasst, um Betriebsergebnis-Informationen jedes Dateianwendungsprogrammmoduls in der Form von Mail an den Gateway-Fernzugriffsclient zu senden;
wobei der Gateway-Fernzugriffsclient auch ein Mail-Empfangsmodul zum Empfangen von Mails umfasst, die durch das Mail-Sendemodul an den Gateway-Fernzugriffsclient gesendet wurde.

6. Heim-Gateway-Netzwerkspeichersystem nach Anspruch 1, wobei die Gateway-Speichervorrichtung weiter ein Firewall-Modul (101) umfasst, um eine gewisse Sicherheitsstrategie zwischen dem Heim-Gateway und dem Internet durchzuführen und alle Pakete aus dem Internet zu untersuchen, und wobei die Pakete nur von dem Heim-Gateway akzeptiert werden, wenn die Pakete Sicherheitsbestimmungen erfüllen, wobei anderenfalls die Pakete verworfen werden.

7. Netzwerkzugriffsverfahren zum Zugreifen auf ein Heim-Gateway-Netzwerkspeichersystem umfassend eine Gateway-Speichervorrichtung und einen Gateway-Fernzugriffsclient, die durch ein Netzwerk verbunden sind,
wobei das Verfahren die folgenden Schritte umfasst:
Schritt A: Einloggen eines entfernten Benutzers in die Gateway-Speichervorrichtung durch ein Fernzugriffsclient-Programmmodul (115) des Gateway-Fernzugriffsclients, Eingeben von Authentisierungsinformationen durch den entfernten Benutzer und Senden von gesammelten Authentisierungsinformationen durch ein in dem Frontend untergebrachtes Programmmodul (102) an ein Berechtigungs-Verwaltungsmodul (110) zur Authentisierung der Benutzerberechtigung:
Schritt B: Zugreifen auf die Gateway-Speichervorrichtung durch das Netzwerk durch den entfernten Benutzer unter Verwendung des Fernzugriffsclient-Programmmoduls (115) des Gateway-Fernzugriffsclients und Übertragen eines Befehls an das in dem Frontend untergebrachte Programmmodul der Gateway-Speichervorrichtung;
Schritt C: Empfangen eines Dateivorgangsbefehls von dem Fernzugriffsclient-Programmmodul (115) durch das in dem Frontend untergebrachte Programmmodul, Weiterleiten des Befehls gemäß der Art des Befehls an ein entsprechendes Dateiservermodul (107) der Gateway-Speichervorrichtung zur Verarbeitung, im Falle eines Herunterladens, Hochladens oder Durchsuchens von Dateien in der Gateway-Speichervorrichtung Auslesen der Dateien aus einem Speicher durch das Dateiservermodul (107) und Senden der Dateien an den Gateway-Fernzugriffsclient, um gespeichert oder angezeigt zu werden, oder Empfangen von Dateien von dem Gateway-Fernzugriffsclient und Speichern der Dateien in dem Speicher der Gateway-Speichervorrichtung;
**dadurch gekennzeichnet, dass** in dem Schritt C, falls die Art des Befehls ein Fern-Herunterladen einer Datei von einem Dateiserver ist, das in dem Frontend untergebrachte Programmmodul (102) den Befehl an ein Clientmodul mit einem entsprechenden Protokoll in einem Datei-Clientmodul (104) senden wird, wobei das Clientmodul sich mit einem entfernten Server verbindet und Dateien gemäß Dateiherunterladeadress-Informationen des entfernten Dateiservers in dem Befehl herunterlädt, und wobei die heruntergeladenen Dateien durch ein Dateisystemmodul in dem Speicher der Gateway-Speichervorrichtung gesichert werden.

8. Netzwerkzugriffsverfahren nach Anspruch 7, wobei das Netzwerkzugriffsverfahren weiter einen Vorgang des Herunterladens eines Fernzugriffs-Clientprogramms umfasst, umfassend die Schritte:
(a) Einloggen in einer Heim-Gateway-Speichervorrichtung und Eingeben von Authentisierungsinformationen durch einen entfernten Benutzer durch einen WEB-Browser des Gateway-Fernzugriffsclient und Übertragen der Informationen an ein HTTP-Servermodul (108) der Gateway-Speichervorrichtung;
(b) Analysieren des HTTP-Pakets durch das HTTP-Servermodul (108) und Ermitteln, dass das Paket ein Benutzerauthentisierungspaket ist, Senden des Pakets an das Berechtigungs-Verwaltungsmodul (110) zur Authentisierung der Benutzerberechtigung, und Beenden (203), falls die Authentisierung nicht durchgeführt werden kann und der Zugriff fehlschlägt;
(c) Überprüfen, durch das HTTP-Servermodul (108), ob der Gateway-Femzugriffs-Client das Fernzugriffs-Clientprogramm des Heim-Gateway installiert hat oder nicht, nachdem die Authentisierung des Benutzers durchgeführt wurde, falls ja, kann der entfernte Benutzer auf die Gateway-Speichervorrichtung zugreifen, um Dateien darin zu verarbeiten, und Beenden; anderenfalls Fortfahren mit Schritt (d);
(d) Einkapseln eines Fernzugriffs-Clientinstallationsprogramms der Gateway-Speichervorrichtung in ein HTTP-Protokoll-Paket, das durch das HTTP-Servermodul (108) an den Gateway-Fernzugriffs-Client gesendet werden soll, und automatisches Installieren des Programms, nachdem das Programm heruntergeladen wurde, und Erzeugen eines grafischen Schnittstellen-Programms (205).

9. Netzwerkzugriffsverfahren nach Anspruch 7, wobei in dem Schritt C ein Benutzer einen Vorgangsergebnis-Benachrichtigungsmodus auswählen kann, der mindestens einen Mailbenachrichtigungsmodus und einen Nachrichtenbenachrichtigungsmodus einschließt, wobei, bevor Vorgänge an Dateien ausgeführt werden und nachdem Vorgänge an Dateien abgeschlossen wurden das Dateiservermodul (107) oder das Dateiclientmodul (104) ein Vorgangsergebnis an das in dem Frontend untergebrachte Programmmodul (102) sendet; wobei das in dem Frontend untergebrachte Programmmodul den Vorgangsergebnis-Benachrichtigungsmodus beurteilt, der von dem Benutzer ausgewählt wurde:
wenn der Vorgangsergebnis-Benachrichtigungsmodus der Mail-Benachrichtigungsmodus ist, eine Nachricht an einen SMTP-Mail-Server gesendet wird, und der SMTP-Mail-Server eine Benachrichtigungsmail an eine durch einen entfernten Benutzer gesetzte Mailadresse senden wird,
wenn der Vorgangsergebnis-Benachrichtigungsmodus der Nachrichten-Benachrichtigungsmodus ist, eine Nachricht an das Fernzugriffs-Clientprogrammmodul (115) gesendet wird, und ein Dateivorgangsergebnis direkt auf einer grafischen Schnittstelle angezeigt wird.

10. Netzwerkzugriffsverfahren nach Anspruch 7 oder 8, wobei ein Firewall-Modul (101) der Gateway-Speichervorrichtung alle Pakete aus dem Internet untersucht, und wobei die Pakete nur von dem Heim-Gateway akzeptiert werden, wenn die Pakete Sicherheitsbestimmungen erfüllen, wobei andernfalls die Pakete verworfen werden.

## Revendications

1. Système de stockage réseau de passerelle domestique, comprenant un dispositif de stockage de passerelle et un client d'accès distant de passerelle connecté par l'intermédiaire d'un réseau,
le dispositif de stockage de passerelle comprenant :
un module de programme résident frontal (102) pour distribuer des paquets et gérer et maintenir des tâches d'accès de réseau ;
un module serveur de fichiers (107), comprenant des modules serveurs ayant un ou plusieurs protocoles, pour interagir avec un client de fichier distant et un module de système de fichiers et fournir des fonctions de chargement de fichiers et de téléchargement de fichiers ;
un module de gestion de droit (110) pour exécuter une authentification d'utilisateur et un contrôle de droit pour un accès d'utilisateur distant ;
le module de système de fichiers pour gérer un stockage dans le dispositif de stockage de passerelle et pour exécuter des opérations de lecture et d'écriture de fichiers dans le stockage ;
un stockage pour offrir un espace de stockage de fichiers ;
le client d'accès distant de passerelle comprend un module de programme d'accès client distant (115) pour offrir une interface aux utilisateurs pour accéder à distance à un dispositif de stockage de passerelle domestique ;
où le module de programme résident frontal (102) transfère des paquets envoyés par le module de programme de client d'accès distant (115) à un module serveur ayant un protocole correspondant ou au module de gestion de droit (110) conformément au type de paquets, et le module de système de fichiers traite des demandes envoyées par chaque module de programme d'application de fichier pour lire et écrire des fichiers dans le stockage,
**caractérisé en ce que** le dispositif de stockage de passerelle comprend en outre un module de client de fichiers (104) comprenant des modules clients ayant un ou plusieurs protocoles, utilisés pour se connecter à un serveur distant et pour télécharger des fichiers conformément à des informations d'adresse de téléchargement de fichiers de serveur de fichiers distant dans la demande de téléchargement transférée par le module de programme résident frontal (102), et les fichiers téléchargés sont sauvegardés dans un support de stockage du dispositif de stockage de passerelle par l'intermédiaire du module de système de fichiers ; le module de programme de client d'accès distant (115) est également utilisé pour préciser les informations d'adresse de téléchargement de fichiers d'un serveur de fichiers distant et pour envoyer les informations au module de programme résident frontal (102) ; le module de programme résident frontal (102) transfère les informations au module de client ayant un protocole correspondant dans le module de client de fichiers (104) conformément au type de protocole de paquets.

2. Système de stockage réseau de passerelle domestique selon la revendication 1, dans lequel le module serveur de fichiers (107) comprend un module serveur FTP (109) et/ou un module serveur HTTP (108).

3. Système de stockage réseau de passerelle domestique selon la revendication 1, dans lequel le module de client de fichiers (104) comprend un module de client FTP (106) et/ou un module de client HTTP (105).

4. Système de stockage réseau de passerelle domestique selon la revendication 1, dans lequel un module de stockage du dispositif de stockage de passerelle stocke un programme d'installation de client d'accès distant ; le client d'accès distant de passerelle comprend également un navigateur web (116) pour envoyer des informations de connexion à un module serveur HTTP (108) par l'intermédiaire du module de programme résident frontal (102) ; le module serveur de fichiers (107) comprend un module serveur HTTP (108) pour soumettre les informations de connexion reçues au module de gestion de droit (110) pour authentification, et si les informations de réussite d'authentification sont renvoyées et s'il est détecté qu'un client d'accès distant n'a pas installé un programme de client d'accès distant de passerelle domestique, le programme sera encapsulé et transféré audit client d'accès distant ; après avoir été téléchargé, le programme d'installation de client d'accès distant est automatiquement installé pour générer le module de programme de client d'accès distant (115).

5. Système de stockage réseau de passerelle domestique selon la revendication 1, dans lequel ledit dispositif de stockage de passerelle comprend en outre un module d'envoi de courriel pour envoyer des informations de résultat d'opération de chaque module de programme d'application de fichier sous forme de courriel au client d'accès distant de passerelle ; ledit client d'accès distant de passerelle comprend également un module de réception de courriel pour recevoir des courriels envoyés par le module d'envoi de courriel au client d'accès distant de passerelle.

6. Système de stockage réseau de passerelle domestique selon la revendication 1, dans lequel le dispositif de stockage de passerelle comprend en outre un module de pare-feu (101) pour exécuter une stratégie de sécurité particulière entre une passerelle domestique et Internet et pour examiner tous les paquets provenant d'Internet et, seulement si les paquets satisfont des normes de sécurité, les paquets seront acceptés par la passerelle domestique ; dans le cas contraire les paquets seront rejetés.

7. Procédé d'accès de réseau pour un système de stockage réseau de passerelle domestique, comprenant un dispositif de stockage de passerelle et un client d'accès distant de passerelle connecté par l'intermédiaire d'un réseau, le procédé comprenant les étapes suivantes :
étape A : se connecter au dispositif de stockage de passerelle par un utilisateur distant par l'intermédiaire d'un module de programme de client d'accès distant (115) du client d'accès distant de passerelle, entrer des informations d'authentification par l'utilisateur distant, et envoyer des informations d'authentification collectées par un module de programme résident frontal (102) à un module de gestion de droit (110) pour une authentification de droit d'utilisateur ;
étape B : accéder au dispositif de stockage de passerelle par l'intermédiaire d'un réseau par l'utilisateur distant au moyen du module de programme de client d'accès distant (115) du client d'accès distant de passerelle, et transférer une commande au module de programme résident frontal du dispositif de stockage de passerelle ;
étape C : recevoir une commande d'opération de fichier depuis le module de programme de client d'accès distant (115) par le module de programme résident frontal, transférer la commande conformément au type de commande d'un module serveur de fichiers correspondant (107) du dispositif de stockage de passerelle pour traitement, en cas de téléchargement, de chargement ou de navigation dans les fichiers dans le dispositif de stockage de passerelle, lire les fichiers depuis un stockage par le module serveur de fichiers (107) et envoyer les fichiers au client d'accès distant de passerelle pour être sauvegardés ou affichés, ou recevoir des fichiers depuis le client d'accès distant de passerelle et sauvegarder les fichiers dans le stockage du dispositif de stockage de passerelle,
**caractérisé en ce que** dans ladite étape C, si le type de commande est un téléchargement de fichier de serveur de fichiers distant, le module de programme résident frontal (102) enverra la commande à un module de client ayant un protocole correspondant dans un module de client de fichiers (104), le module de client se connecte à un serveur distant et télécharge des fichiers conformément aux informations d'adresse de téléchargement de fichier d'un serveur de fichiers distant dans la commande, et les fichiers téléchargés sont sauvegardés dans le stockage du dispositif de stockage de passerelle par l'intermédiaire d'un module de système de fichiers.

8. Procédé d'accès au réseau selon la revendication 7, dans lequel le procédé d'accès au réseau comprend en outre un processus de téléchargement de programme de client d'accès distant, comprenant les étapes suivantes :
(a) se connecter à un dispositif de stockage de passerelle domestique et entrer des informations d'authentification par un utilisateur distant par l'intermédiaire d'un navigateur WEB du client d'accès distant de passerelle, et transférer les informations au module serveur HTTP (108) du dispositif de stockage de passerelle ;
(b) analyser un paquet HTTP par le module serveur HTTP (108) et identifier que le paquet est un paquet d'authentification d'utilisateur, envoyer le paquet au module de gestion de droit (110) pour une authentification de droit d'utilisateur, si l'authentification ne peut pas être établie, l'accès échoue, fin du processus (203) ;
(c) vérifier si le client d'accès distant de passerelle a installé, ou pas, le programme de client d'accès distant de passerelle domestique par le module serveur HTTP (108) après que l'authentification d'utilisateur a été établie, dans l'affirmative, l'utilisateur distant pouvant accéder au dispositif de stockage de passerelle pour utiliser des fichiers s'y trouvant, fin du processus ; dans le cas contraire, passer à l'étape (d) (204) ;
(d) encapsuler un programme d'installation de client d'accès distant du dispositif de stockage de passerelle dans un paquet de protocole HTTP à envoyer au client d'accès distant de passerelle par le module serveur HTTP (108), et installer automatiquement le programme après que le programme a été téléchargé, et générer un programme d'interface graphique (205).

9. Procédé d'accès au réseau selon la revendication 7, dans lequel dans ladite étape C, un utilisateur peut sélectionner un mode de notification de résultat d'opération qui comprend au moins un mode de notification par courriel et un mode de notification par message avant d'exécuter des opérations sur des fichiers, et après que les opérations sur des fichiers ont été réalisées, le module serveur de fichiers (107) ou le module de client de fichiers (104) envoie un résultat d'opération au module de programme résident frontal (102) ; le module de programme résident frontal juge le mode de notification de résultat d'opération sélectionné par l'utilisateur :
si le mode de notification de résultat d'opération est le mode de notification par courriel, un message sera envoyé à un serveur de courriel SMTP, et le serveur de courriel SMTP enverra un courriel de notification à une adresse courriel définie par un utilisateur distant ;
si le mode de notification de résultat d'opération est le mode de notification par message, un message sera envoyé au module de programme de client d'accès distant (115), et un résultat d'opération de fichier sera directement affiché sur une interface graphique.

10. Procédé d'accès au réseau selon la revendication 7 ou la revendication 8, dans lequel un module pare-feu (101) du dispositif de stockage de passerelle examine tous les paquets provenant d'Internet, et seulement si les paquets satisfont des normes de sécurité, les paquets seront acceptés par la passerelle domestique ; dans le cas contraire, les paquets seront rejetés.
